# EUROPEAN PATENT APPLICATION

(11) **EP 2 950 594 A1**
(43) Date of publication of application: **02.12.2015**
(21) Application number: 13881289.6
(22) Date of filing: 02.04.2013
(51) Int. Cl.: H04W 52/04

(54) **CHANNEL CONFIGURATION METHOD, DEVICE AND SYSTEM**

(71) Applicant: Huawei Technologies Co., Ltd., Longgang District Shenzhen, Guangdong 518129 (CN)
(72) Inventor: WU, Huifang, Shenzhen Guangdong 518129 (CN); MA, Xueli, Shenzhen Guangdong 518129 (CN); WANG, Zongjie, Shenzhen Guangdong 518129 (CN); ZHENG, Xiaoxiao, Shenzhen Guangdong 518129 (CN); FENG, Li, Shenzhen Guangdong 518129 (CN)
(74) Representative: Haley, Stephen
(86) International application number: PCT/CN2013/073664
(87) International publication number: WO 2014/161158

(57) **Abstract**

Embodiments of the present invention disclose a channel configuration method, including: generating, by a network side device, channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and sending, by the network side device, the channel configuration information to user equipment UE, so that the UE receives the downlink F-DPCH and the downlink DPCH according to the channel configuration information. The embodiments of the present invention further provide a corresponding network side device, a base station, UE and a network system. In the embodiments of the present invention, utilization of a downlink code resource can be improved, the downlink code resource can be reduced, and scheduling flexibility of HSDPA can be ensured.

## Description

### TECHNICAL FIELD

The present invention relates to the field of communications, and in particular, to a channel configuration method, a device and a system.

### BACKGROUND

Currently, to ensure security of data transmission on a wireless network, a dedicated channel (Dedicated Channel, DCH) is generally used to perform transmission and reception of data. During a process of transmitting data by using the DCH, a dedicated physical control channel (Dedicated physical Control Channel, DPCCH) is in a continuous transmission and reception state all the time. However, when no data is transmitted, the DPCCH is also in the continuous transmission and reception state, which causes a waste of power, and even causes interference to transmission and reception of other signals.

To reduce power and reduce interference, a discontinuous transmission (Discontinuous Transmission, DTX) and discontinuous reception (Discontinuous Reception, DRX) technology is introduced to a DCH, that is, the DCH is used to perform discontinuous transmission and discontinuous reception of data, so that when no data is transmitted, a DPCCH may not be in a reception state or a continuous transmission state, thereby reducing power, and reducing interference to transmission and reception of other signals. After the DTX and DRX technology is introduced to the DCH, researchers find that, a DTX and DRX gain may be maximized by shortening a transmission time interval (Transmission Time Interval, TTI) of data. However, transmission within a shorter TTI cannot be implemented unless an existing spreading factor (Spreading factor, SF) is reduced, but reduction of the SF causes problems of reducing a downlink code resource and even limiting a code resource. Multi-user time division multiplexing is a necessity of reducing a downlink code resource. However, that multiple users multiplex a downlink dedicated physical channel channel (Dedicated Physical Channel, DPCH) in a time division manner may affect scheduling flexibility of High Speed Downlink Packet Access (High Speed Downlink Packet Access, HSDPA).

### SUMMARY

Embodiments of the present invention provide a channel configuration method, used to ensure scheduling flexibility of HSDPA while reducing a downlink code resource. The embodiments of the present invention further provide a corresponding network side device, a base station, user equipment (User Equipment, UE), and a network system.

A first aspect of the present invention provides a channel configuration method, including:
generating, by a network side device, channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
sending, by the network side device, the channel configuration information to user equipment UE, so that the UE receives the downlink F-DPCH and the downlink DPCH according to the channel configuration information.

With reference to the first aspect, in a first possible implementation manner of the first aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the first aspect or the first possible implementation manner of the first aspect, in a second possible implementation manner of the first aspect, the downlink DPCH is not used for transmission of control information.

With reference to the first aspect, the first possible implementation manner or the second possible implementation manner, in a third possible implementation manner of the first aspect, the downlink DPCH is a multi-user time division multiplexing channel.

With reference to the first aspect, the first possible implementation manner, the second possible implementation manner or the third possible implementation manner, in a fourth possible implementation manner of the first aspect, the channel configuration information includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the first aspect, the first possible implementation manner, the second possible implementation manner or the third possible implementation manner, in a fifth possible implementation manner of the first aspect, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

With reference to the first aspect or with reference to any one of the first to fifth possible implementation manners of the first aspect, in a sixth possible implementation manner of the first aspect, the network side device is a radio network controller.

With reference to the first aspect or with reference to any one of the first to sixth possible implementation manners of the first aspect, in a seventh possible implementation manner of the first aspect, the network side device further sends the channel configuration information to a base station, so that the base station configures the downlink F-DPCH and the downlink DPCH.

A second aspect of the present invention provides a channel configuration method, including:
receiving, by a base station, channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
configuring, by the base station, the downlink fractional-dedicated physical channel F-DPCH and the downlink dedicated physical channel DPCH according to the channel configuration information.

With reference to the second aspect, in a first possible implementation manner of the second aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the second aspect or the first possible implementation manner of the second aspect, in a second possible implementation manner of the second aspect, the downlink DPCH is not used for transmission of control information.

With reference to the second aspect, the first possible implementation manner or the second possible implementation manner, in a third possible implementation manner of the second aspect, the downlink DPCH is a multi-user time division multiplexing channel.

With reference to the second aspect, the first possible implementation manner, the second possible implementation manner or the third possible implementation manner, in a fourth possible implementation manner of the second aspect, the channel configuration information includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the second aspect, the first possible implementation manner, the second possible implementation manner or the third possible implementation manner, in a fifth possible implementation manner of the second aspect, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

A third aspect of the present invention provides a channel configuration method, including:
receiving, by user equipment UE, channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
receiving, by the UE, the downlink F-DPCH and the downlink DPCH according to the channel configuration information.

With reference to the third aspect, in a first possible implementation manner of the third aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the third aspect or the first possible implementation manner of the third aspect, in a second possible implementation manner of the third aspect, the downlink DPCH is not used for transmission of control information.

With reference to the third aspect, the first possible implementation manner or the second possible implementation manner, in a third possible implementation manner of the third aspect, the downlink DPCH is a multi-user time division multiplexing channel.

With reference to the third aspect, the first possible implementation manner, the second possible implementation manner or the third possible implementation manner, in a fourth possible implementation manner of the third aspect, the channel configuration information includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the third aspect, the first possible implementation manner, the second possible implementation manner or the third possible implementation manner, in a fifth possible implementation manner of the third aspect, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

With reference to the third aspect or with reference to any one of the first to fifth possible implementation manners of the third aspect, in a sixth possible implementation manner of the third aspect, the method includes: performing timing, by the UE, on an uplink dedicated physical channel DPCH according to the channel configuration information after the downlink F-DPCH and the downlink DPCH are received.

With reference to the sixth possible implementation manner of the third aspect, in a seventh possible implementation manner of the third aspect, the performing timing, by the UE, on an uplink dedicated physical channel DPCH includes:
performing timing, by the UE, on the uplink DPCH by using the downlink fractional-dedicated physical channel F-DPCH in the channel configuration information as a timing reference, so that the uplink DPCH is sent 1024 chips lather than the downlink F-DPCH.

With reference to the fourth or fifth possible implementation manner of the third aspect, in an eighth possible implementation manner of the third aspect, the method includes: setting, by the UE, a configuration parameter DOFF value to the default DPCH offset value or a sum of the default DPCH offset value and 256.

A fourth aspect of the present invention provides a network side device, including:
a generating unit, configured to generate channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a sending unit, configured to send the channel configuration information generated by the generating unit to user equipment UE, so that the UE receives the downlink F-DPCH and the downlink DPCH according to the channel configuration information.

With reference to the fourth aspect, in a first possible implementation manner of the fourth aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the fourth aspect or the first possible implementation manner of the fourth aspect, in a second possible implementation manner of the fourth aspect, the downlink DPCH is not used for transmission of control information.

With reference to the fourth aspect, the first possible implementation manner or the second possible implementation manner, in a third possible implementation manner of the fourth aspect, the downlink DPCH is a multi-user time division multiplexing channel.

With reference to the fourth aspect, the first possible implementation manner, the second possible implementation manner or the third possible implementation manner, in a fourth possible implementation manner of the fourth aspect, the channel configuration information generated by the generating unit includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the fourth aspect, the first possible implementation manner, the second possible implementation manner or the third possible implementation manner, in a fifth possible implementation manner of the fourth aspect, the channel configuration information generated by the generating unit includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

With reference to the fourth aspect or with reference to any one of the first to fifth possible implementation manners of the fourth aspect, in a sixth possible implementation manner of the fourth aspect, the network side device is a radio network controller.

With reference to the fourth aspect or with reference to any one of the first to sixth possible implementation manners of the fourth aspect, in a seventh possible implementation manner of the fourth aspect, the sending unit is further configured to send the channel configuration information generated by the generating unit to a base station, so that the base station configures the downlink F-DPCH and the downlink DPCH.

A fifth aspect of the present invention provides a base station, including:
a receiving unit, configured to receive channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a configuring unit, configured to configure the downlink fractional-dedicated physical channel F-DPCH and the downlink dedicated physical channel DPCH according to the channel configuration information received by the receiving unit.

With reference to the fifth aspect, in a first possible implementation manner of the fifth aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the fifth aspect or the first possible implementation manner of the fifth aspect, in a second possible implementation manner of the fifth aspect, the downlink DPCH is not used for transmission of control information.

With reference to the fifth aspect, the first possible implementation manner or the second possible implementation manner, in a third possible implementation manner of the fifth aspect, the downlink DPCH is a multi-user time division multiplexing channel.

With reference to the fifth aspect, the first possible implementation manner, the second possible implementation manner or the third possible implementation manner, in a fourth possible implementation manner of the fifth aspect, the channel configuration information received by the receiving unit includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the fifth aspect, the first possible implementation manner, the second possible implementation manner or the third possible implementation manner, in a fifth possible implementation manner of the fifth aspect, the channel configuration information received by the receiving unit includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

A sixth aspect of the present invention provides user equipment, including:
a receiving unit, configured to receive channel configuration information sent by a network side device, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a configuring unit, configured to receive the downlink F-DPCH and the downlink DPCH according to the channel configuration information received by the receiving unit.

With reference to the sixth aspect, in a first possible implementation manner of the sixth aspect, a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

With reference to the sixth aspect or the first possible implementation manner of the sixth aspect, in a second possible implementation manner of the sixth aspect, the downlink DPCH is not used for transmission of control information.

With reference to the sixth aspect, the first possible implementation manner or the second possible implementation manner, in a third possible implementation manner of the sixth aspect, the downlink DPCH is a multi-user time division multiplexing channel.

With reference to the sixth aspect, the first possible implementation manner, the second possible implementation manner or the third possible implementation manner, in a fourth possible implementation manner of the sixth aspect, the channel configuration information received by the receiving unit includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

With reference to the sixth aspect, the first possible implementation manner, the second possible implementation manner or the third possible implementation manner, in a fifth possible implementation manner of the sixth aspect, the channel configuration information received by the receiving unit includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

With reference to the sixth aspect or with reference to any one of the first to fifth possible implementation manners of the sixth aspect, in a sixth possible implementation manner of the sixth aspect, the user equipment further includes a timing unit, where the timing unit is configured to perform timing on an uplink dedicated physical channel DPCH according to the channel configuration information, which is received by the receiving unit, after the configuring unit receives the downlink F-DPCH and the downlink DPCH.

With reference to the sixth possible implementation manner of the sixth aspect, in a seventh possible implementation manner of the sixth aspect, the timing unit is specifically configured to perform timing on the uplink DPCH by using the downlink F-DPCH in the channel configuration information received by the receiving unit as a timing reference, so that the uplink DPCH is sent 1024 chips later than the downlink F-DPCH.

With reference to the fourth or fifth possible implementation manner of the sixth aspect, in an eighth possible implementation manner of the sixth aspect, the configuring unit is further configured to set a configuration parameter DOFF value to the default DPCH offset value or a sum of the default DPCH offset value and 256.

A seventh aspect of the present invention provides a network system, including:
the network side device according to the fourth aspect and various possible implementation manner of the fourth aspect; and
the user equipment according to the sixth aspect and various possible manners of the sixth aspect.

With reference to the seventh aspect of the present invention, in a first possible manner of the seventh aspect, the network side device is a radio network controller, and the network system further includes the base station according to the fifth aspect and various possible manners of the fifth aspect.

In the embodiments of the present invention, a downlink F-DPCH is used for transmission of transmit power control (Transmission Power Control, TPC) information. Because an F-DPCH is multiplexed by multiple users in a time division manner and TPC information of at most 10 users can be carried in one slot , TPC information of another HSDPA user can also be transmitted at the same time when DPCH data is transmitted, thereby achieving an effect that DCH transmission and HSDPA transmission are not mutually affected, and ensuring scheduling of HSDPA while ensuring normal transmission of a DPCH.

### BRIEF DESCRIPTION OF DRAWINGS

FIG. 1 is a schematic flowchart of a channel configuration method according to Embodiment 1 of the present invention;
FIG. 2 is a schematic flowchart of a channel configuration method according to Embodiment 2 of the present invention;
FIG. 3 is a schematic diagram illustrating that multiple users multiplex a downlink DPDCH in a time division manner;
FIG. 4 is a schematic flowchart of a channel configuration method according to Embodiment 3 of the present invention;
FIG. 5 is a schematic flowchart of a channel configuration method according to Embodiment 4 of the present invention;
FIG. 6 is a structural block diagram of a network side device according to Embodiment 5 of the present invention;
FIG. 7 is a structural block diagram of a base station according to Embodiment 6 of the present invention;
FIG. 8 is a structural block diagram of user equipment according to Embodiment 7 of the present invention;
FIG. 9 is a structural block diagram of a network side device according to Embodiment 8 of the present invention;
FIG. 10 is a structural block diagram of a base station according to Embodiment 9 of the present invention;
FIG. 11 is a structural block diagram of user equipment according to Embodiment 10 of the present invention; and
FIG. 12 is a structural block diagram of a network system according to Embodiment 11 of the present invention.

### DESCRIPTION OF EMBODIMENTS

Embodiments of the present invention provide a channel configuration method, and the embodiments of the present invention further provide a corresponding network side device, a base station, user equipment and a network system, which are separately described in detail in the following.

### Embodiment 1

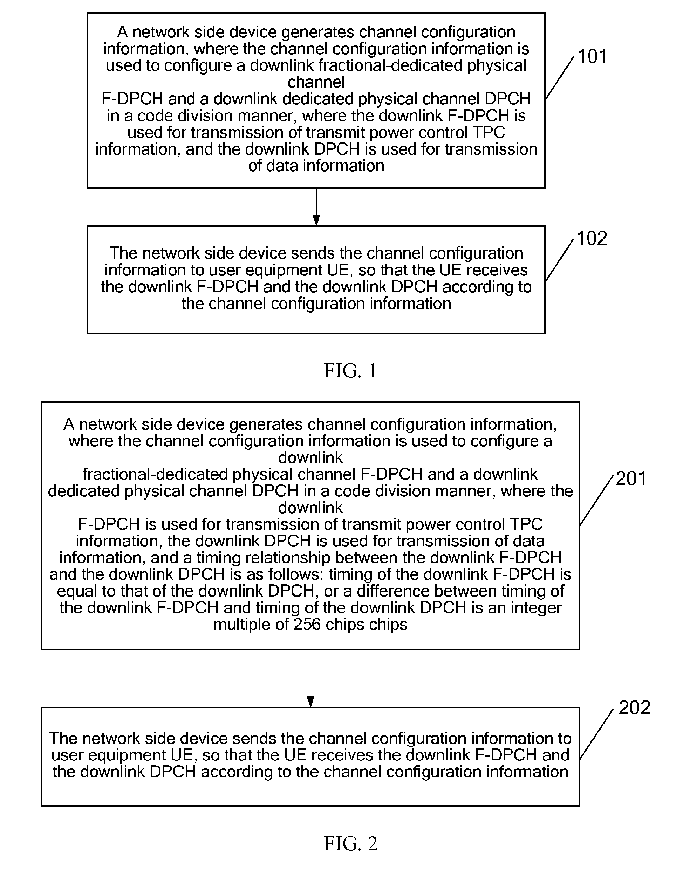

As shown in FIG. 1, this embodiment provides a channel configuration method, including:

101: A network side device generates a channel configuration information, where the channel configuration information is used to configure a downlink fractional-dedicated physical channel (Fraction-Dedicated Physical Channel, DPCCH) and a downlink dedicated physical channel (Dedicated Physical Channel, DPCCH) in a code division manner, where the downlink F-DPCH is used for transmission of transmit power control (Transmission Power Control, TPC) information, and the downlink dedicated physical channel channel (Dedicated Physical Channel, DPCH) is used for transmission of data information.

102: The network side device sends the channel configuration information to user equipment (User Equipment, UE), so that the UE receives the downlink F-DPCH and the downlink DPCH according to the channel configuration information.

The channel configuration information generated by the network side device includes information used to configure the downlink F-DPCH and the downlink DPCH in a code division manner. The network side device sends the channel configuration information to the UE, and may configure both the downlink F-DPCH and the downlink DPCH in a code division manner for the UE. Likewise, the network side device sends the channel configuration information to a base station, and may configure both the downlink F-DPCH and the downlink DPCH in a code division manner for the base station.

After the downlink F-DPCH and the downlink DPCH are configured for the UE, because the downlink DPCH occupies only one code resource but can support data information transmission of multiple users, many downlink code resources can be saved, and a downlink capacity can be increased. The downlink F-DPCH is used for transmission of transmit power control TPC information, and because an F-DPCH is multiplexed by multiple users in a time division manner and TPC information of at most 10 users can be carried in one slot, TPC of another HSDPA user can also be transmitted at the same time when DPCH data is transmitted, thereby achieving an effect that DCH transmission and HSDPA transmission are not mutually affected, and ensuring scheduling of HSDPA while ensuring normal transmission of a DPCH. In addition, in the prior art, a downlink DPCCH is generally used for transmission of TPC information. However, in this embodiment, the downlink F-DPCH is used for transmission of TPC information, and the downlink DPCH may not be used for transmission of the control information but is only used for transmission of data information, thereby avoiding a relatively high peak-to-average ratio generated during a process of transmitting a downlink signal.

### Embodiment 2

As shown in FIG. 2, this embodiment provides a channel configuration method, including:
201: A network side device generates channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, the downlink DPCH is used for transmission of data information, and a timing relationship between the downlink F-DPCH and the downlink DPCH is as follows: timing of the downlink F-DPCH is equal to that of the downlink DPCH, or a difference between timing of the downlink F-DPCH and timing of the downlink DPCH is an integral multiple of 256 chips (chips).
202: The network side device sends the channel configuration information to user equipment UE, so that the UE receives the downlink F-DPCH and the downlink DPCH according to the channel configuration information.

Specifically, when a value of a Default DPCH Offset Value of the downlink F-DPCH is an even multiple of 256 chips, that is, a product of 256 multiplied by 2n (n is an integer), timing of the DPCH channel is equal to that of the F-DPCH channel. That is, when a configuration parameter DOFF value of a channel is a multiple of 512 chips, timing of the DPCH channel is equal to that of the F-DPCH channel. For example, the Default DPCH Offset Value of the F-DPCH may be set to 0, 512 or 1024, so that timing of the DPCH channel is equal to that of the F-DPCH channel. When the value of the Default DPCH Offset Value of the downlink F-DPCH is an odd multiple of 256 chips, that is, 256 multiplied by 2n+1 (n is an integer) (for example, when a DOFF value corresponding to the F-DPCH is a value such as 256 or 768), a difference between timing of the DPCH channel and timing of the F-DPCH channel may be 256 chips. Therefore, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

In this embodiment, during a process of configuring the downlink F-DPCH and the downlink DPCH, the channel configuration information sent by the network side device to the user equipment UE includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

To ensure that a configured channel can be normally used when a terminal is in a soft handover area, the following measures may be further used in this embodiment of the present invention. Specifically, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information. It should be noted herein that, the channel configuration information sent by the network side device to the UE may include at least two radio links.

In this embodiment, the network side device may be a radio network controller (Radio Network Controller, RNC). The RNC may further send the channel configuration information to a base station, so that the base station configures the downlink F-DPCH and the downlink DPCH.

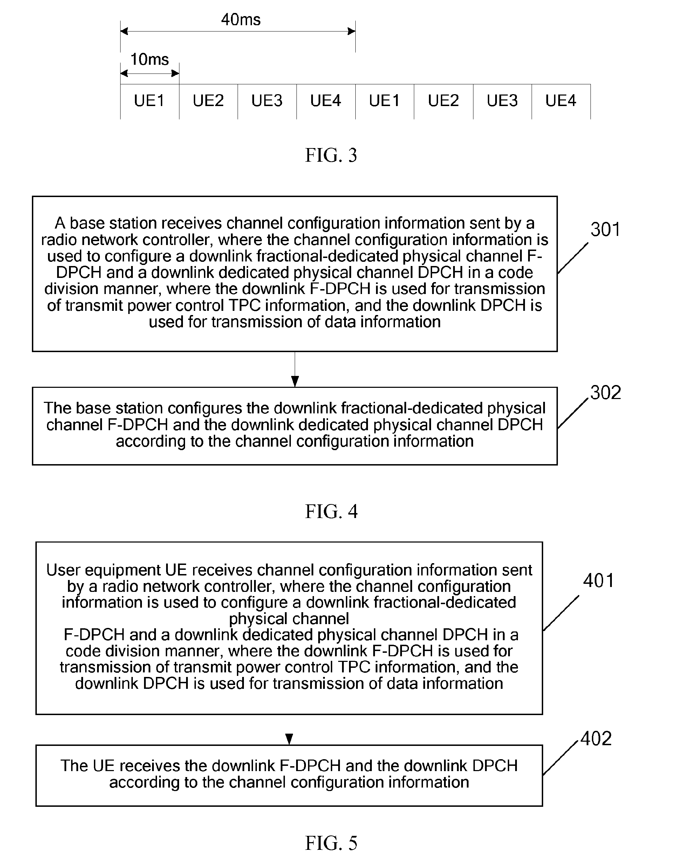

It should be noted that, in this embodiment, the downlink DPCH may be a multi-user time division multiplexing channel, and may be shared by multiple users. Specifically, as shown in FIG. 3, users UE1, UE2, UE3 and UE4 multiplex a downlink DPDCH channel in a time division manner, and the users send respective data information within respective sending time periods, where the sending time periods of the users are equal. Therefore, the users may send respective data information at equal probabilities. For example, a transmission time interval is 40 ms, a sending time period of each user is 10 ms, and UE1, UE2, UE3 and UE4 may transmit respective data information in each transmission time interval, where UE1 transmits data information in the first 10 ms of each transmission time interval, UE2 transmits data information in the second 10 ms of each transmission time interval, UE3 transmits data information in the third 10 ms of each transmission time interval, and UE4 transmits data information in the fourth 10 ms of each transmission time interval, so that UE1, UE2, UE3 and UE4 multiplex a downlink DPCH in a time division manner.

When multiple users multiplex a downlink DPCH in a time division manner, in order to transmit necessary TPC information and ensure scheduling of HSDPA, the TPC information of the users is carried on an F-DPCH channel. In this way, multi-user time division multiplexing may be used to reduce a downlink code resource and ensure scheduling flexibility of the HSDPA. In addition, in the prior art, a downlink DPCCH is generally used for transmission of TPC information. However, in this embodiment, a downlink F-DPCH replaces the downlink DPCCH to transmit the TPC information; the downlink DPCH may not include the downlink DPCCH, and may not be used for transmission of the control information but is only used for transmission of data information, thereby avoiding a relatively high peak-to-average ratio generated during a process of transmitting a downlink signal.

### Embodiment 3

As shown in FIG. 4, this embodiment provides a channel configuration method, including:

301: Abase station receives channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information.

302: The base station configures the downlink fractional-dedicated physical channel F-DPCH and the downlink dedicated physical channel DPCH according to the channel configuration information. That is, the base station may configure both the downlink F-DPCH and the downlink DPCH.

Optionally, in step 301 and step 302, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

### Embodiment 4

As shown in FIG. 5, this embodiment provides a channel configuration method, including:
401: User equipment UE receives channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information.
402: The UE receives the downlink F-DPCH and the downlink DPCH according to the channel configuration information.

Optionally, in step 401 and step 402, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

Generally, the UE uses a downlink channel as a reference to perform timing on an uplink channel. Because the channel configuration information is configuration information of the downlink channel, the UE may perform timing on an uplink dedicated physical channel DPCH according to the channel configuration information after the downlink F-DPCH and the downlink DPCH are received. The step of performing timing, by the UE, on an uplink dedicated physical channel DPCH may include: performing timing, by the UE, on the uplink DPCH by using the downlink fractional-dedicated physical channel F-DPCH in the channel configuration information as a timing reference, so that the uplink DPCH is sent 1024 chips later than the downlink F-DPCH.

In this embodiment, the UE may set a configuration parameter DOFF value to the default DPCH offset value or a sum of the default DPCH offset value and 256.

### Embodiment 5

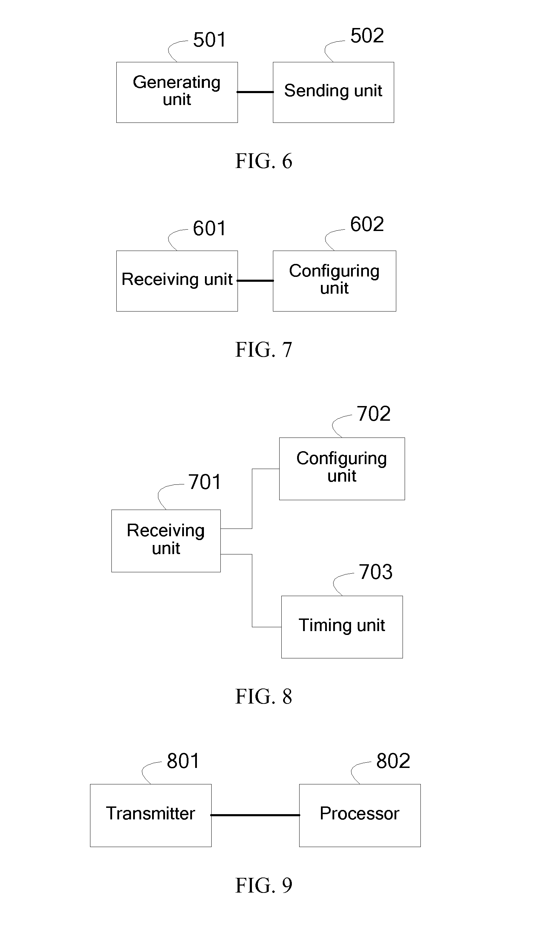

As shown in FIG. 6, this embodiment provides a network side device, including:
a generating unit 501, configured to generate channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a sending unit 502, configured to send the channel configuration information generated by the generating unit to user equipment UE, so that the UE receives and configures the downlink F-DPCH and the downlink DPCH according to the channel configuration information.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

In addition, because the downlink F-DPCH is used for transmission of TPC information, the downlink DPCH may not be used for transmission of the control information.

Optionally, the channel configuration information generated by the generating unit 501 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information generated by the generating unit includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

Optionally, the channel configuration information includes at least two radio links.

Optionally, the network side device is a radio network controller.

Optionally, the sending unit 502 is further configured to send the channel configuration information generated by the generating unit 501 to a base station, so that the base station configures the downlink F-DPCH and the downlink DPCH.

### Embodiment 6

As shown in FIG. 7, this embodiment provides a base station, including:
a receiving unit 601, configured to receive channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a configuring unit 602, configured to configure the downlink fractional-dedicated physical channel F-DPCH and the downlink dedicated physical channel DPCH according to the channel configuration information received by the receiving unit 701.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information received by the receiving unit 601 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information received by the receiving unit 601 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

### Embodiment 7

As shown in FIG. 8, this embodiment provides user equipment UE, including:
a receiving unit 701, configured to receive channel configuration information sent by a network side device, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information; and
a configuring unit 702, configured to receive the downlink F-DPCH and the downlink DPCH according to the channel configuration information received by the receiving unit 701.

Optionally, the network side device may be a radio network controller.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information received by the receiving unit 701 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information received by the receiving unit 701 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

In this embodiment, the user equipment may further include a timing unit 703, where the timing unit 703 is configured to perform timing on an uplink dedicated physical channel DPCH according to the channel configuration information, which is received by the receiving unit 701, after the configuring unit 702 receives the downlink F-DPCH and the downlink DPCH.

In this embodiment, the timing unit 703 is further configured to perform timing on the uplink DPCH by using the downlink F-DPCH in the channel configuration information received by the receiving unit as a timing reference, so that the uplink DPCH is sent 1024 chips later than the downlink F-DPCH.

Optionally, the configuring unit 702 is further configured to set a configuration parameter DOFF value to the default DPCH offset value or a sum of the default DPCH offset value and 256.

### Embodiment 8

As shown in FIG. 9, this embodiment provides a network side device, including: a processor 802 and a transmitter 801, where the transmitter 801 is connected to the processor 802.

The processor 802 is configured to generate channel configuration information, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information.

The transmitter 801 is configured to send the channel configuration information to user equipment UE, so that the UE receives the downlink F-DPCH and the downlink DPCH according to the channel configuration information.

A timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

In addition, because the downlink F-DPCH is used for transmission of TPC information, the downlink DPCH may not be used for transmission of the control information.

Optionally, the downlink DPCH is a multi-user time division multiplexing channel.

Optionally, the channel configuration information generated by the processor 802 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

The channel configuration information generated by the processor 802 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

Optionally, the channel configuration information may further include at least two radio links.

Optionally, the network side device may be a radio network controller.

Optionally, the transmitter 801 may further be configured to send the channel configuration information generated by the processor 802 to a base station, so that the base station configures the downlink F-DPCH and the downlink DPCH.

### Embodiment 9

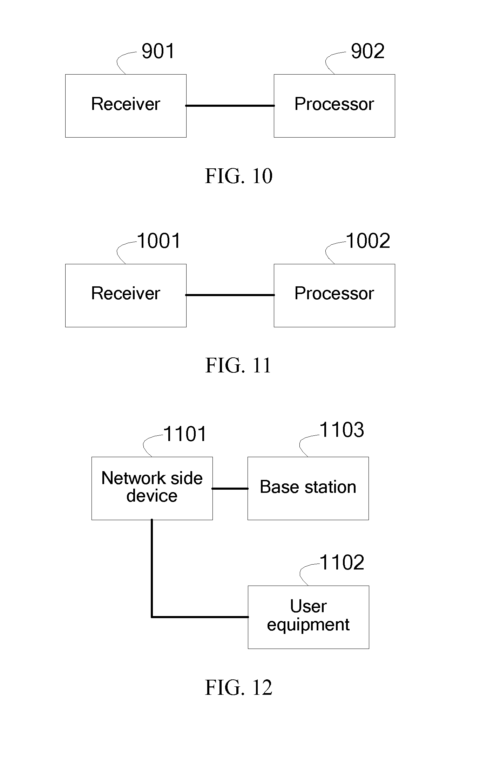

As shown in FIG. 10, this embodiment provides a base station, including: a receiver 901 and a processor 902, where the receiver 901 is connected to the processor 902.

The receiver 901 is configured to receive channel configuration information sent by a radio network controller, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information.

The processor 902 is configured to configure the downlink fractional-dedicated physical channel F-DPCH and the downlink dedicated physical channel DPCH according to the channel configuration information received by the receiver 901.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information received by the receiver 901 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
   where mod denotes a remainder operator.

Optionally, the channel configuration information received by the receiver 901 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

### Embodiment 10

As shown in FIG. 11, this embodiment provides user equipment, including: a receiver 1001 and a processor 1002, where the receiver 1001 is connected to the processor 1002.

The receiver 1001 is configured to receive channel configuration information sent by a network side device, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information.

The processor 1002 is configured to receive the downlink F-DPCH and the downlink DPCH according to the channel configuration information received by the receiver 1001.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information received by the receiver 1001 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information received by the receiver 1001 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

Optionally, the network side device may be a radio network controller.

In this embodiment, the processor 1002 is further configured to perform timing on an uplink dedicated physical channel DPCH according to the channel configuration information, which is received by the receiver 1001, after the downlink F-DPCH and the downlink DPCH are received.

Optionally, the processor 1002 is further configured to perform timing on the uplink DPCH by using the downlink F-DPCH in the channel configuration information received by the receiver 1001 as a timing reference, so that the uplink DPCH is sent 1024 chips later than the downlink F-DPCH.

Optionally, the processor 1002 is further configured to set a configuration parameter DOFF value to the default DPCH offset value or a sum of the default DPCH offset value and 256.

### Embodiment 11

As shown in FIG. 12, this embodiment provides a network system, including:
a network side device 1101, configured to generate channel configuration information, and send the channel configuration information to user equipment UE 1102 and a base station 1103, where the channel configuration information is used to configure a downlink fractional-dedicated physical channel F-DPCH and a downlink dedicated physical channel DPCH in a code division manner, where the downlink F-DPCH is used for transmission of transmit power control TPC information, and the downlink DPCH is used for transmission of data information;
the UE 1102, configured to receive the channel configuration information sent by the network side device 1101, and receive the downlink F-DPCH and the downlink DPCH according to the channel configuration information; and
the base station 1103, configured to receive the channel configuration information sent by the network side device 1101, and configure the downlink F-DPCH and the downlink DPCH according to the channel configuration information.

Optionally, a timing relationship between the downlink F-DPCH and the downlink DPCH is as follows: timing of the downlink F-DPCH is equal to that of the downlink DPCH; or a difference between timing of the downlink F-DPCH and timing of the downlink DPCH is an integral multiple of 256 chips.

Optionally, the downlink DPCH is not used for transmission of control information.

Optionally, the downlink DPCH is a multi-user time division multiplexing channel.

Optionally, the channel configuration information sent by the network side device 1101 to the UE 1102 and the base station 1103 includes a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
where mod denotes a remainder operator.

Optionally, the channel configuration information sent by the network side device 1101 to the UE 1102 and the base station 1103 includes a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
where j denotes the first radio link in the configuration information.

In this embodiment, the UE 1102 is further configured to perform timing on an uplink dedicated physical channel DPCH according to the channel configuration information, which is sent by the network side device 1101, after the configuring unit receives the downlink F-DPCH and the downlink DPCH.

The UE 1102 may further be configured to perform timing on the uplink DPCH by using the downlink F-DPCH in the channel configuration information sent by the network side device 1101 as a timing reference, so that the uplink DPCH is sent 1024 chips later than the downlink F-DPCH.

The UE 1102 may further be configured to set a configuration parameter DOFF value to the default DPCH offset value or a sum of the default DPCH offset value and 256.

Optionally, the network side device in this embodiment may be a radio network controller.

A person of ordinary skill in the art may understand that all or a part of the steps of the methods in the embodiments may be implemented by a program instructing relevant hardware. The program may be stored in a computer readable storage medium. The storage medium may include: a read only memory (ROM, Read Only Memory), a random access memory (RAM, Random Access Memory), a magnetic disk, or an optical disc.

The foregoing describes in detail a channel configuration method, a network side device, a base station, user equipment UE, and a network system that are provided in the embodiments of the present invention. In this specification, specific examples are used to describe the principle and implementation manners of the present invention, and the description of the embodiments is only intended to help understand the method and core idea of the present invention. Meanwhile, a person of ordinary skill in the art may make, based on the idea of the present invention, modifications with respect to the specific implementation manners and the application scope. Therefore, the content of this specification shall not be construed as a limitation on the present invention.

## Claims

1. A channel configuration method, comprising:
generating, by a network side device, channel configuration information, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
sending, by the network side device, the channel configuration information to user equipment UE, so that the UE receives the downlink F-DPCH and the downlink DPCH according to the channel configuration information.

2. The channel configuration method according to claim 1, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

3. The channel configuration method according to claim 1 or 2, wherein the downlink DPCH is not used for transmission of control information.

4. The channel configuration method according to any one of claims 1 to 3, wherein the downlink DPCH is a multi-user time division multiplexing channel.

5. The channel configuration method according to any one of claims 1 to 4, wherein the channel configuration information comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

6. The channel configuration method according to any one of claims 1 to 4, wherein,
the channel configuration information comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes a first radio link in the configuration information.

7. The channel configuration method according to any one of claims 1 to 6, wherein the network side device is a radio network controller.

8. The channel configuration method according to claim 7, wherein the network side device further sends the channel configuration information to a base station, so that the base station configures the downlink F-DPCH and the downlink DPCH.

9. A channel configuration method, comprising:
receiving, by a base station, channel configuration information sent by a radio network controller, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
configuring, by the base station, the downlink fractional-dedicated physical channel F-DPCH and the downlink dedicated physical channel DPCH according to the channel configuration information.

10. The channel configuration method according to claim 9, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

11. The channel configuration method according to claim 9 or 10, wherein the downlink DPCH is not used for transmission of control information.

12. The channel configuration method according to any one of claims 9 to 11, wherein the downlink DPCH is a multi-user time division multiplexing channel.

13. The channel configuration method according to any one of claims 9 to 12, wherein the channel configuration information comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

14. The channel configuration method according to any one of claims 9 to 12, wherein,
the channel configuration information comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes the first radio link in the configuration information.

15. A channel configuration method, comprising:
receiving, by user equipment UE, channel configuration information sent by a radio network controller, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
receiving, by the UE, the downlink F-DPCH and the downlink DPCH according to the channel configuration information.

16. The channel configuration method according to claim 15, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

17. The channel configuration method according to claim 15 or 16, wherein the downlink DPCH is not used for transmission of control information.

18. The channel configuration method according to any one of claims 15 to 17, wherein the downlink DPCH is a multi-user time division multiplexing channel.

19. The channel configuration method according to any one of claims 15 to 18, wherein the channel configuration information comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

20. The channel configuration method according to any one of claims 15 to 18, wherein,
the channel configuration information comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes the first radio link in the configuration information.

21. The channel configuration method according to any one of claims 15 to 20, comprising:
performing timing, by the UE, on an uplink dedicated physical channel DPCH according to the channel configuration information after the downlink F-DPCH and the downlink DPCH are received.

22. The channel configuration method according to claim 21, wherein the performing timing, by the UE, on an uplink dedicated physical channel DPCH comprises:
performing timing, by the UE, on the uplink DPCH by using the downlink fractional-dedicated physical channel F-DPCH in the channel configuration information as a timing reference, so that the uplink DPCH is sent 1024 chips later than the downlink F-DPCH.

23. The channel configuration method according to claim 19 or 20, comprising:
setting, by the UE, a configuration parameter DOFF value to the default DPCH offset value or a sum of the default DPCH offset value and 256.

24. A network side device, comprising:
a generating unit, configured to generate channel configuration information, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
a sending unit, configured to send the channel configuration information generated by the generating unit to user equipment UE, so that the UE receives the downlink F-DPCH and the downlink DPCH according to the channel configuration information.

25. The network side device according to claim 24, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

26. The network side device according to claim 24 or 25, wherein the downlink DPCH is not used for transmission of control information.

27. The network side device according to claim 24, 25 or 26, wherein the downlink DPCH is a multi-user time division multiplexing channel.

28. The network side device according to any one of claims 24 to 27, wherein the channel configuration information generated by the generating unit comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

29. The network side device according to any one of claims 24 to 27, wherein,
the channel configuration information generated by the generating unit comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes the first radio link in the configuration information.

30. The network side device according to any one of claims 24 to 29, wherein the network side device is a radio network controller.

31. The network side device according to claim 30, wherein the sending unit is further configured to send the channel configuration information generated by the generating unit to a base station, so that the base station configures the downlink F-DPCH and the downlink DPCH.

32. Abase station, comprising:
a receiving unit, configured to receive channel configuration information sent by a radio network controller, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
a configuring unit, configured to configure the downlink fractional-dedicated physical channel F-DPCH and the downlink dedicated physical channel DPCH according to the channel configuration information received by the receiving unit.

33. The base station according to claim 32, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

34. The base station according to claim 32 or 33, wherein the downlink DPCH is not used for transmission of control information.

35. The base station according to claim 32, 33 or 34, wherein the downlink DPCH is a multi-user time division multiplexing channel.

36. The base station according to any one of claims 32 to 35, wherein the channel configuration information received by the receiving unit comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

37. The base station according to any one of claims 32 to 35, wherein,
the channel configuration information received by the receiving unit comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes the first radio link in the configuration information.

38. User equipment, comprising:
a receiving unit, configured to receive channel configuration information sent by a network side device, wherein the channel configuration information is used to configure a downlink fractional-dedicated physical channel F-DPCH and a downlink dedicated physical channel DPCH in a code division manner, wherein the downlink F-DPCH is used for transmission of transmit power control TPC information, and the downlink DPCH is used for transmission of data information; and
a configuring unit, configured to receive the downlink F-DPCH and the downlink DPCH according to the channel configuration information received by the receiving unit.

39. The user equipment according to claim 38, wherein a timing relationship between the downlink F-DPCH and the downlink DPCH is as follows:
timing of the downlink F-DPCH is equal to that of the downlink DPCH; or
a difference between timing of the downlink F-DPCH and timing of the downlink DPCH is an integral multiple of 256 chips.

40. The user equipment according to claim 38 or 39, wherein the downlink DPCH is not used for transmission of control information.

41. The user equipment according to claim 38, 39 or 40, wherein the downlink DPCH is a multi-user time division multiplexing channel.

42. The user equipment according to any one of claims 38 to 41, wherein the channel configuration information received by the receiving unit comprises a default DPCH offset value Default DPCH offset value and a timing offset DPCH frame offset of an F-DPCH frame relative to a primary common control physical channel P-CCPCH frame, and when both the downlink F-DPCH and the downlink DPCH are configured for the UE, the Default DPCH offset value and the DPCH frame offset meet the following condition:
(Default DPCH Offset Value) mod 38400 = DPCH frame offset, or
(Default DPCH Offset Value+256) mod 38400 = DPCH frame offset,
wherein mod denotes a remainder operator.

43. The user equipment according to any one of claims 38 to 41, wherein,
the channel configuration information received by the receiving unit comprises a default DPCH offset value Default DPCH offset value and a timing offset DPCH frame offsetⱼ of an F-DPCH frame relative to a primary common control physical channel P-CCPCH frame, and when both the downlink F-DPCH and the downlink DPCH are configured for the UE, the Default DPCH offset value and the DPCH frame offsetⱼ meet the following condition:
(Default DPCH Offset Value) mod 38400 = DPCH frame offsetⱼ, or
(Default DPCH Offset Value+256) mod 38400 = DPCH frame offsetⱼ,
wherein j denotes the first radio link in the configuration information.

44. The user equipment according to any one of claims 38 to 43, further comprising a timing unit, wherein the timing unit is configured to perform timing on an uplink dedicated physical channel DPCH according to the channel configuration information, which is received by the receiving unit, after the configuring unit receives the downlink F-DPCH and the downlink DPCH.

45. The user equipment according to claim 44, wherein,
the timing unit is specifically configured to perform timing on the uplink DPCH by using the downlink F-DPCH in the channel configuration information received by the receiving unit as a timing reference, so that the uplink DPCH is sent 1024 chips lather than the downlink F-DPCH.

46. The user equipment according to claim 42 or 43, wherein,
the configuring unit is further configured to set a configuration parameter DOFF value to the default DPCH offset value or a sum of the default DPCH offset value and 256.

47. A network system, comprising:
the network side device according to any one of claims 24 to 31; and
the user equipment according to any one of claims 38 to 46.

48. The network system according to claim 47, wherein the network side device is a radio network controller, and the network system further comprises the base station according to any one of claims 32 to 37.
